# EUROPÄISCHE PATENTSCHRIFT

(11) **EP 3 230 123 B1**
(45) Veröffentlichungstag und Bekanntmachung des Hinweises auf die Patenterteilung: **15.01.2020**
(21) Anmeldenummer: 15820031.1
(22) Anmeldetag: 11.12.2015
(51) Int. Cl.: B60P 7/08

(54) **VORRICHTUNG UND VERFAHREN ZUR MESSUNG DER ZUGSPANNUNG IN EINEM SPANNGURT**
DEVICE AND METHOD FOR MEASURING TENSION IN A LASHING STRAP
DISPOSITIF ET PROCÉDÉ DE MESURE DE L'EFFORT DE TRACTION DANS UNE SANGLE DE SERRAGE

(30) Priorität: 11.12.2014 CH 19142014
(43) Veröffentlichungstag der Anmeldung: 18.10.2017
(73) Patentinhaber: SpanSet Inter AG, 8832 Wollerau (CH)
(72) Erfinder: HORN, Peter, 8887 Mels (CH); SIEGRIST, Heinz, 8757 Filzbach (CH); MAMIÉ, André, 8820 Wädenswil (CH)
(74) Vertreter: Riederer Hasler & Partner Patentanwälte AG
(86) Internationale Anmeldenummer: PCT/CH2015/000182
(87) Internationale Veröffentlichungsnummer: WO 2016/090504

(56) Entgegenhaltungen:
- EP-A1- 1 467 193
- WO-A1-2006/098681
- WO-A1-2009/113873
- GB-A- 2 466 463

## Beschreibung

Die vorliegende Erfindung betrifft eine Vorrichtung und ein Verfahren zur Messung der Zugspannung in einem Spanngurt gemäss den Oberbegriffen von Anspruch 1 und Anspruch 11.

### Stand der Technik

Das deutsche Patent DE 197 39 667 betrifft eine Vorrichtung zum Erfassen der Bandspannung eines Gurtbandes, insbesondere Zurrgurtes, mit einem Basisgehäuse mit quer zur Gehäuselängsachse angeordneten Führungen für das Gurtband, wobei zwischen zwei ortsfesten Führungen eine mittels zumindest einer Feder elastisch abgestützte Führung vorgesehen ist, und wobei im Zuge der Messung der Bandspannung das mit seiner Flachseite wechselweise gegen die Führungen anliegende Gurtband auf der federelastischen Führung aus seinem gestreckten Verlauf in eine spannungsproportionale Auslenkung in Messrichtung gezwungen wird, und mit einer der federelastischen Führung zugeordneten Spannungsanzeigeskala zum Anzeigen des Spannungszustandes des ausgelenkten Gurtbandes. Die federelastische Führung ist als in ein Stempelgehäuse eintauchender Auslenkstempel ausgebildet, welcher mit vorgegebenem Hub aus einer Ruhestellung in eine Messstellung überführbar ist. Die Feder ist dabei zwischen einem Hub übertragenden Anschlag und einer Basis des Auslenkstempels gehalten und in Messstellung nach Maßgabe des Spannungszustandes des Gurtbandes unter Verringerung des Abstandes zwischen Basis und Anschlag sowie unter zunehmender Eintauchtiefe des Auslenkstempels in das Stempelgehäuse komprimierbar, wobei die Eintauchtiefe des Auslenkstempels mittels einer Spannungsanzeigeskala erfassbar ist.

Aus der US Patentanmeldung US 2003/0174055 ist ein Alarmgerät für die Anzeige der Spannung eines Zurrgurtes bekannt, das in den Spanngurt integriert ist und bei Verlust der Gurtspannung einen Alarm auslöst. Das Gerät umfasst eine in einem Gehäuse angeordnete Feder, die mittels eines mit dem Spanngurt verbundenen Bolzens je nach angelegter Spannkraft zusammengedrückt wird. Ist keine oder eine zu niedrige Spannkraft an den Spanngurt angelegt, betätigt die Feder einen Kontakt, der ein Alarmsignal auslöst. Das Alarmsignal wird sodann per Funk an ein Empfangsgerät in der Fahrerkabine weiter geleitet. Nachteilig an dieser Anordnung ist, dass nur ein digitaler Wert (ja/nein) übertragen wird.

Auch aus der GB-A-2 466 463 ist eine ähnliche Vorrichtung bekannt, welche einen Spannungsindikator für Spanngurten zeigt. Das Gehäuse des Indikators lässt sich mit zwei gegenüberliegenden Durchschlauföffnungen längs in den Spanngurt einhängen. An dem Gehäuse ist eine Feder befestigt, welche normal zu dem Spanngurt orientiert ist und in Abhängigkeit von der Gurtspannung komprimiert wird. Die Feder öffnet und schliesst einen elektrischen Kontakt und wirkt dadurch wie ein Schalter, der anzeigt, ob die Gurtspannung ausreichend ist oder nicht. Der Sensor respektive Schalter ist dabei an der dem Spanngurt abgewandten Seite der Feder angeordnet. Dadurch kann ebenfalls nur ein digitaler Wert (0 oder 1) erfasst werden. Die unterschiedlichen Positionen der Feder relativ zum Gehäuse in Abhängigkeit von der Gurtspannung können mit einer solchen Sensoranordnung an einem Ende der Feder nicht erfasst werden.

Das US Patent 7,112,023 betrifft ein Alarmgerät für die Detektion einer ungenügenden Spanngurtspannung, das an einen Spanngurt anlegbar ist. Das Gerät umfasst ein zweiteiliges Gehäuse, das an zwei einander gegenüberliegenden Stirnseiten je einen Schlitz zum Ein- resp. Herausführen eines Spanngurts hat. Im Gehäuseinneren befindet sich eine gebogene Metallfeder, die den zwischen den beiden Schlitzen sich befindenden Abschnitt des Spanngurts auslenkt. Nimmt die Zugspannung zu, wird die Metallfeder zusammengedrückt, was ein Mass für die angelegte Zugspannung ist. Mittels eines unter der Metallfeder angeordneten Näherungssensors wird der Abstand zwischen dem Näherungssensor und der gekrümmten Feder gemessen. Liegt die Zugspannung unterhalb eines vorbestimmten Schwellwerts, wird ein elektronisches Signal ausgelöst. Als Näherungssensoren kommen lichtbasierte Sensoren oder Bewegungssensoren in Frage. Vorgeschlagen wird auch der Einsatz eines Magnets, durch welchen ein Signal ausgelöst wird, wenn die Feder vom Magnetfeld erfasst wird.

Die EP-A-1 467 193 offenbart ein System zum Überwachen des Sitzes resp. Spannung eines Gurtes für die Ladungssicherung. Das System umfasst einen in eine Gurteinheit integrierten Kraftsensor, der die Kraft misst, die zur Auslenkung des gespannten Gurtes um eine vorgegebenen Weg notwendig ist. Dabei wird der ordnungsgemässe Sitz eines Gurtes ständig, d.h. auch während der Fahrt des Fahrzeugs automatisch kontrolliert, und die Daten von einem Sender an eine Anzeigeeinheit per Funk übertragen. Gemäss der EP-A-1 467 193 können die Werte der erfassten Gurtspannung, Änderungen der erfassten Gurtspannung und das Unterschreiten eines Schwellwertes angezeigt werden. Die EP-A-1 467 193 schlägt vor, die eingesetzte Kraft mit einem Dehnungsmessstreifen zu messen.

Die WO 2009/113873 beschreibt eine Sensoreinheit zur Überwachung des Zustands von Spanngurten und dergleichen zur Ladungssicherung. Die Sensoreinheit umfasst ein oder mehrere Messelemente, um die Spannkraft, Spannung, Druck, Biegemoment etc. zu messen. Konkret wird vorgeschlagen, eine deformierbare, im Schnitt kreisförmige Hülse einzusetzen, in der ein mit dem Spanngurt verbundener Bolzen aufgenommen ist. Zur Bestimmung der Deformation werden induktive, optische, magnetische und andere Effekte vorgeschlagen, ohne jedoch nähere Ausführungen dazu zu machen, was für welche Sensoren konkret einzusetzen und wie diese anzuordnen sind.

Die EP-A-0 984 873 betrifft einen Belastungsanzeiger zur Anzeige von Zugspannungen an Zugmitteln wie Zugbändern oder Zurrseilen. Diese sind mit einer Schlaufe oder Öse zum Angriff eines eine Gegenhaltekraft zum Zugmittel einleitenden Adaptionsteiles, wie z.B. Bolzen einer Zurrratsche, versehen. Der Belastungsanzeiger der EP-A-0 984 873 hat in etwa die Gestalt einer Kausche, deren Schenkel an den innenliegenden Flanken der Schlaufe oder Öse anliegen und einen etwa quer zu den Innenflanken elastisch verformbaren Anzeigekörper haben.

Eine Weiterentwicklung des oben erwähnten Belastungsanzeigers ist durch die EP-A-1 537 393 offenbart. Bei diesem Belastungsanzeiger ist zwischen einer Feder und dem Bolzen ein Formteil angeordnet, das eine Überspannung und damit eine Veränderung der Federkonstante kommt.

Die beschriebenen Belastungsanzeiger haben den Vorteil, dass diese kostengünstig herstellbar, robust und zuverlässig sind. Nachteilig hingegen ist, dass man sich zum Ablesen der angelegten Spannkraft zum entsprechenden Spanngurt hinbegeben muss.

### Aufgabe

Aufgabe der vorliegenden Erfindung ist es, ein System und ein Verfahren zur Messung der Zugspannung in einem Spanngurt vorzuschlagen, das kostengünstig herstellbar ist und zuverlässige Werte für die Zugspannung liefert. Noch ein Ziel ist es, einen Mehrwert für einen mechanischen Gurtspannungs-Indikator zu schaffen.

### Beschreibung

Diese und weitere Ziele werden durch den Gegenstand gemäss Anspruch 1 erreicht. Vorteilhafte Ausgestaltungen des erfindungsgemässen Gegenstands sind in den Unteransprüchen definiert.

Die Erfindung betrifft eine Vorrichtung zur Messung der Zugspannung in einem Spanngurt mit einem elastisch verformbaren Federelement, welches in Abhängigkeit von der Zugspannung des Spanngurts deformierbar ist. Die Vorrichtung umfasst weiterhin eine elektronische Sensoreinheit mit einer Sensoranordnung, die die Auslenkung des Federelements misst und einem Sender, der ein Datensignal an einen Empfänger überträgt.

Gemäss Kennzeichen des unabhängigen Anspruchs 1 wird die Lösung der Aufgabe dadurch erreicht, dass die Sensoranordnung an den Enden des Federelements angeordnet ist. Diese Anordnung hat den Vorteil, dass das Konzept eines mechanischen Gurtspannungs-Indikators übernommen werden kann und die Sensoranordnung in das bestehende Konzept integrierbar ist. Dadurch können die Entwicklungskosten niedrig gehalten werden, da der bestehende Indikator günstig herstellbar ist. Der bestehende mechanische Indikator, welcher im Markt seit Jahren akzeptiert und nachgefragt ist, erhält durch die Sensoranordnung einen Mehrwert für den Kunden, welcher in der Herstellung kostengünstig und im Aufbau einfach ist.

Der bestehende mechanische Gurtspannungs-Indikator ist bevorzugt ein U-förmiges Formteil mit zwei elastisch deformierbaren Schenkeln. In einer besonders bevorzugten Ausführungsform ist die Sensoranordnung in den Schenkeln des Federelements integriert. Der Abstand der Schenkel ist von der Grösse der Gurtspannung abhängig. Je grösser die Gurtspannung ist, umso näher werden die beiden Schenkel aneinander gedrückt. Die Sensoranordnung in den Schenkeln hat den Vorteil, dass die Sensoranordnung lediglich den Abstand zwischen den beiden Schenkeln messen muss, um Daten für die Grösse der Gurtspannung zu erhalten.

In einer weiteren bevorzugten Ausführungsform ist die Sensoranordnung im Bereich der freien Enden der Schenkel integriert. An den freien Enden ist die Änderung des Abstands relativ zur Gurtspannung am Grössten. Dementsprechend genau kann durch diese Sensorpositionierung gemessen werden, da relativ zur Spannungsänderung eine signifikante Abstandsänderung vorhanden ist. Auch ist an den freien Enden ausreichend Platz um die Sensoranordnung zu integrieren. Ein weiterer Vorteil besteht darin, dass eine ohnedies vorhandene Metallklammer, welche die Rückstellkraft des Indikators bewirkt, die Sensoranordnung gegen äussere Einflüsse abschirmt und schützt. Die Sensoranordnung kann voll verkapselt in den freien Schenkelenden integriert sein, wodurch ein ausreichender Schutz auch gegenüber starken äusseren Belastungen erreicht wird. Bevorzugt ist es, wenn die gesamte Sensoreinheit in den Schenkel integriert ist. In den Schenkeln ist Platz für die gesamte Sensoreinheit und diese ist in ihrer Gesamtheit gut gegenüber mechanischen Belastungen geschützt, da sie sich in den Schenkeln voll verkapseln lässt.

In einer weiteren bevorzugten Ausführungsform ist die Sensoranordnung durch ein magnetisches Messsystem gebildet. Magnetische Messsysteme sind typischerweise unempfindlich gegenüber Feuchtigkeit und Verschmutzungen. Magnetische Sensoren sind für den Einsatz im Transportwesen, welches typischerweise mit rauen Einsatzbedingungen einhergeht, daher optimal geeignet.

In einer weiteren besonders bevorzugten Ausführungsform ist die Sensoranordnung entweder durch einen Magnetsensor, insbesondere einen Hallsensor und einen Permanentmagneten oderdurch einen Wirbelstromsensor und eine Metallplatte gebildet. Diese magnetischen Messsysteme arbeiten zuverlässig und unempfindlich. Der Hall-Sensor bietet den Vorteil, dass er Signale liefert, nicht nur bei Zustandsänderungen, sondern auch wenn das Magnetfeld, indem er sich befindet, konstant ist. Daher kann er ein Messsignal in Echtzeit liefern und kann die Gurtspannung kontinuierlich messen, auch wenn diese konstant ist. Denkbar sind als magnetische Sensoranordnung auch ein Magnetoresistor und eine Feldplatte oder ein GMR (giant magnetoresistance)-Sensor.

Zweckmässigerweise ist die elektronische Sensoreinheit in dem Federelement integriert. Dadurch, dass die gesamte Sensoreinheit samt Mikroprozessor, Sensoranordnung, Energiequelle und Sender in dem U-förmigen Formteil integriert sind, ist das Federelement bzw. der Spannungsindikator ein einstückiges kompaktes Bauteil.

Als vorteilhaft erweist es sich, wenn der Sender und ein mit dem Sender verbundenes Sendemodul für die 1-Weg Kommunikation ausgelegt sind. Der Sender ist grundsätzlich dazu ausgelegt Daten in unterschiedlichen Zeitintervallen, je nach dem welcher Betriebsmodus gewählt ist, zu senden. Die 1-Weg Kommunikation ist besonders energiesparend. Beispielsweise kann der Bluetooth 4.0 Standard in dem Sendemodul eingesetzt werden, welcher durch Senden von reduzierten Datensätzen und anderen energieoptimierenden Einstellungen, als äusserst batterieschonend gilt.

Zweckmässigerweise umfasst die Vorrichtung zusätzliche Funk-Repeater oder -Relais. Diese Einrichtungen ermöglichen die Reichweite der Funkkommunikation auch bei ungünstigen Umgebungsbedingungen, beispielsweise bei Ladungen mit viel Metall oder Metallverschalung oder bei sehr langer Lastenzügen oder Ladebrücken.

Mit Vorteil wirkt der Hall-Sensor durch Anlegen eines externen Wechselfeldes als ein Schalter zwischen unterschiedlichen Betriebsmodi. Dieses Merkmal ermöglicht es, dass keine physischen Schalter oder Schnittstellen benötigt werden, um den Indikator zu kalibrieren, einzustellen oder zu konfigurieren. Die Sensoreinheit ist daher, obwohl sie bevorzugt voll verkapselt ist, bedienbar, indem der Zugriff drahtlos erfolgt.

Bevorzugt kann durch Anlegen eines externen Wechselfeldes der Hall-Sensor den Sender und/oder das Sendemodul von einer 1-Weg Kommunikation in einen Sende- und Empfänger Modus (2-Weg Kommunikation) umschalten. Das Umschalten in einen Konfigurationsmodus, in dem die Sensoreinheit kalibriert und konfiguriert werden kann, kann daher drahtlos erfolgen.

Ein weiterer Aspekt der Erfindung betrifft ein Verfahren zur Messung der Zugspannung in einem Spanngurt. Gemäss dem Kennzeichen des unabhängigen Verfahrensanspruch wird die Spannkraft dadurch gemessen, dass die Sensoranordnung an den Enden des Federelements angeordnet und der Abstand der beiden Enden gemessen wird. Eine Änderung der Federspannung bewirkt eine Änderung des Abstands der beiden Enden des Federelements, welche Abstandsänderung von der Sensoranordnung erfasst bzw. gemessen wird.

Gemäss der obigen Ausführungen ist es bevorzugt, wenn die Spannkraft mittels eines Hallsensors und eines Permanentmagneten oder mittels eines Wirbelstromsensors gemessen wird, da diese Messverfahren unempfindlich und verlässlich sind.

Bevorzugt wird im Speicher eines an dem Federelement angeordneten Mikroprozessors ein für das entsprechende Federmittel zutreffender Skalierungsfaktor gespeichert. Der Skalierungsfaktor kann in dem Mikroprozessor hinterlegt oder geändert werden, indem der Mikroprozessor drahtlos von einem Arbeitsmodus in einen Konfigurationsmodus umgeschaltet wird. Durch Änderung des Skalierungsfaktors kann die Vorrichtung geeicht bzw. kalibriert werden. Der Skalierungsfaktor kann bestimmt werden, indem ein Verhältnis zwischen Zugspannung und Abstand der Federelements-Enden zum Beispiel experimentell bestimmt wird.

In einem bevorzugten Verfahrensschritt wird durch Anlegen eines externen elektrischen Wechselfeldes an den Hall-Sensor der Sender und/oder das Sendemodul in einen Empfangsmodus umgeschaltet. Die drahtlose Bedienung der Sensoreinheit erlaubt, dass auf eine physische Schnittstelle, eine Buchse o.ä. verzichtet werden kann. Die Sensoreinheit kann daher besonders gut geschützt ausgeführt sein.

In einem weiteren bevorzugten Verfahrensschritt wird eine Mehrzahl von Indikatoren gemäss einem in der Empfangseinheit hinterlegten Ladeplan mit der Empfangseinheit verbunden, wobei die Systemzuordnung über ein Smartphone erfolgt. Dadurch ist jeder einzelne Indikator während eines Ladeguttransports erfasst und kann über den am Smartphone visualisierten Ladeplan jederzeit lokalisiert werden. Dies ist besonders praktisch, wenn sich einer der Mehrzahl von Spanngurten während der Fahrt löst. Der lose Spanngurt kann umgehend mit Hilfe des Ladeplans lokalisiert werden und anschliessend nachgespannt werden.

Die Erfindung betrifft auch eine Vorrichtung zur Protokollierung der Zugspannung in einem Spanngurt. Die Sensoranordnung ermöglicht es, dass Messsignale in Echtzeit erfasst werden. Das heisst zu jedem beliebigen Zeitpunkt ist ein Messwert vorhanden. Die Messwertaufzeichnung kann daher lückenlos erfolgen und eignet sich hervorragend zur gleichzeitigen Dokumentation (Daten-Logging) der Zugspannungserfassung von einer Vielzahl von Spanngurten.

Mit Vorteil ist die Sensoranordnung entweder durch einen Hallsensor und einen Permanentmagneten, durch einen Wirbelstromsensor und eine Metallplatte, oder durch einen Permanentmagneten und einen Magnetsensor gebildet. Diese magnetischen Messsysteme sind unempfindlich gegen Verschmutzungen und mechanische Belastungen und liefern auch bei einem konstanten Magnetfeld Messdaten.

Ein weiterer Aspekt der Erfindung betrifft ein Verfahren zur Protokollierung der Zugspannung in einem Spanngurt. Gemäss dem Kennzeichen des unabhängigen Verfahrensanspruchs werden die Datensignale in Intervallen als Datenpakete an die Empfängereinheit gesendet, werden in der Empfängereinheit in Echtzeit abgespeichert und sind jederzeit aus der Empfängereinheit auslesbar. Dadurch lässt sich eine lückenlose Datenaufzeichnung realisieren. Das Verfahren ist daher in idealer Weise dazu geeignet, gesetzlich vorgeschriebene Datenaufzeichnungen voll automatisch durchzuführen. Mühsam erstellte manuelle Protokolle über vorgenommene visuelle Kontrollen können demnach entfallen.

In einer besonders bevorzugten Ausführungsform sind die abgespeicherten bzw. aufgezeichneten Datensignale in Gestalt eines computerlesbaren Formats, beispielsweise im pdf-Format, auslesbar.

Ausführungsbeispiele der Erfindung werden nun unter Bezugnahme auf die Zeichnungen beschrieben. Es zeigt:
- Figur 1:: einen Gurtspannungs-Indikator nach dem Stand der Technik,
- Figur 2:: einen Gurtspannungs-Indikator mit einem integrierten Hallsensor in einer Seitenansicht,
- Figur 3:: Eine Draufsicht auf den Indikator aus Figur 2 entlang der Schnittlinie III-III,
- Figur 4:: Eine axonometrische Ansicht des Indikators aus Figur 2,
- Figur 5:: einen Gurtspannungs-Indikator mit einem integrierten Wirbelstromsensor und
- Figur 6:: ein Blockschaltbild des Gurtspannungs-Indikators aus Figur 2.

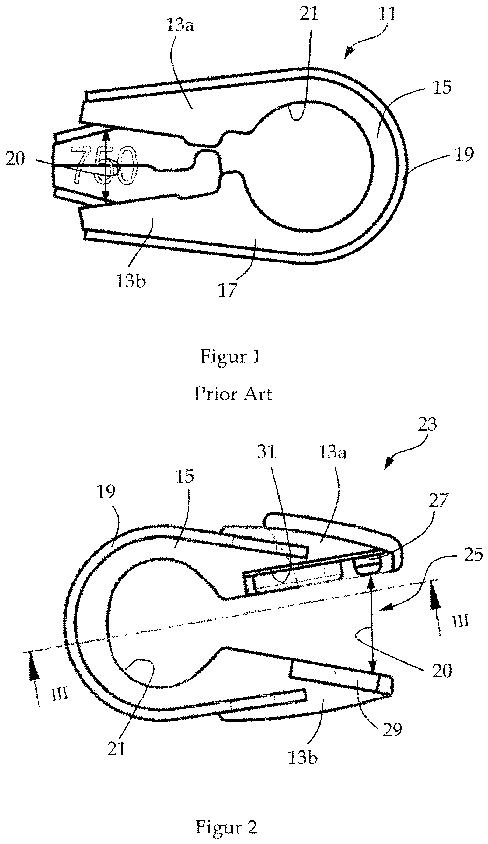

In der Figur 1 ist ein mechanischer Gurtspannungs-Indikator 11 gezeigt, wie er aus dem Stand der Technik bekannt ist. Der Gurtspannungs-Indikator 11 ist ein U-förmiges Formteil mit einem ersten und zweiten elastisch deformierbaren Schenkel 13a,13b und einer Basis 15. Die Basis 15 des Indikators 11 ist im Wesentlichen halbkreisförmig gebogen. Der Indikator 11 umfasst einen Einsatz 17 aus Kunststoff, welcher von einer Metallklammer 19 umgeben ist. Der Einsatz 17 verstärkt die Federwirkung der Metallklammer 19 und ermöglicht die Dauerbelastung des Indikators 11.

Der Indikator 11 ist zwischen einer Schlaufe eines Spanngurts und einem Haltebolzen einer Spannratsche angeordnet. Der Haltebolzen ist durch das Formteil hindurchgeführt, wo die Basis 15 ein Bolzenauge 21 bildet. Der Spanngurt ist an der Aussenseite der Basis 15 umgelenkt und umschlingt den Indikator 11 daher. Durch die Spannkraft, welche in Richtung der Schenkel 13a,13b wirkt, wird deren Abstand 20 beeinflusst. Je höher die Spannkraft ist, umso kleiner wird der Abstand 20 der beiden Schenkel 13a,13b. Der Indikator ist derart dimensioniert, dass bei einer maximalen vorgeschriebenen Spannkraft die Schenkel 13a,13b aneinander anliegen. Die Spannkraft kann nur vor Ort direkt an der Spannratsche abgelesen werden.

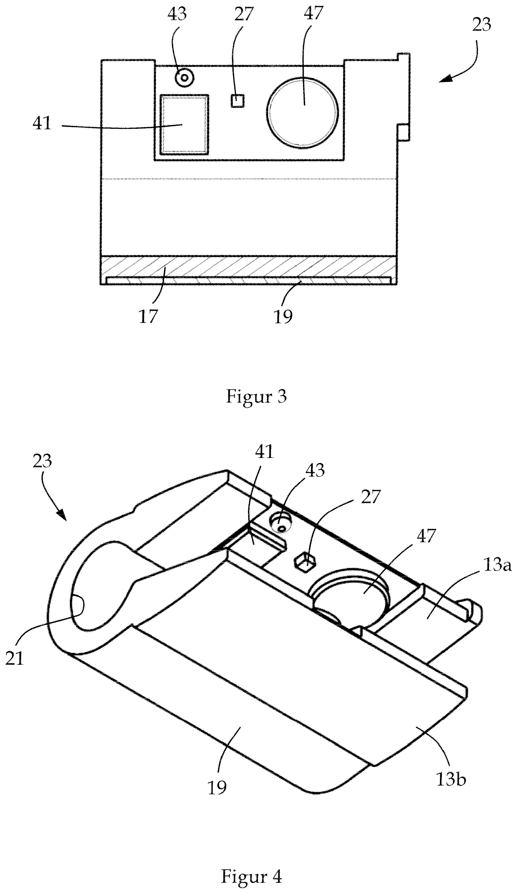

Die erfindungsgemässen Ausführungsformen, welche in den Figuren 2 bis 5 gezeigt sind, zeigen einen elektronischen Gurtspannungs-Indikator 23. Grundsätzlich ist der Indikator 23 in seinem mechanischen Aufbau mit dem Indikator 11 identisch. Er liefert jedoch den Mehrwert, dass die Spannkraft nicht mehr direkt an der Spannratsche abgelesen werden muss, sondern mittels einer Online Anzeige an einem anderen Ort, bevorzugt in der Führerkabine eines Lastwagens, anzeigbar ist. Die erfassten Daten sind keine ungefähren Werte, wie sie von dem mechanischen Indikator 11 angezeigt werden, sondern sind präzise vorzugsweise digitale Daten. Die digitalen Daten können zu jedem Zeitpunkt erfasst werden, sind aufzeichenbar und drahtlos übertragbar. Die digitalen Daten geben Aufschluss über die jeweilige Grösse der Spannkraft an einem definierten Spanngurt zu einem definierten Zeitpunkt.

Um solche digitalen Daten zu erhalten, ist der Indikator 23 mit einer Sensoranordnung in Gestalt eines magnetischen Abstandssensors 25 ausgestattet.

In der Ausführungsform gemäss der Figur 2 ist der Abstandssensor 25 durch einen Hall-Sensor 27 und einen Permanentmagneten 29 realisiert. Das Messprinzip des Hall-Sensors 27 beruht darauf, dass er die Feldstärke eines Magneten misst. Die Feldstärke verändert sich in Abhängigkeit vom Abstand 20 zwischen dem Hall-Sensor 27 und dem Permanentmagneten 29. Der Hallsensor 27 misst die Feldstärke und setzt sie in ein Spannungssignal um. Der Hallsensor generiert auch ein Spannungssignal, wenn die Feldstärke konstant ist, sich der Abstand 20 zum Permanentmagneten 29 also nicht ändert. Der Hallsensor 27, welcher auf einer Leiterplatte 32 angeordnet ist, ist bevorzugt am freien Ende des ersten oder zweiten Schenkels 13a,13b angeordnet. Der Permanentmagnet 29 ist an dem freien Ende des anderen Schenkels 13a,13b angeordnet. Die Messgenauigkeit des Hall-Sensors 27 wird durch Schmutz und Wasser nicht beeinträchtigt, solange diese nicht magnetisch sind. Daher eignet er sich im Einsatz in einem Spanngurt besonders gut, da Spanngurte während Transportfahrten oftmals stark verschmutzt werden.

Bevorzugt sind der Hall-Sensor 27 mitsamt der Leiterplatte 31 und der Permanentmagnet 29 in die Schenkel 13a bzw. 13b integriert. Dadurch ist der Abstandssensor 25 besonders gut geschützt. Die elektronischen Bauteile können in den Schenkeln 13a,13b vollverkapselt sein, beispielsweise indem sie in den Kunststoff des Einsatzes 17 eingegossen sind. In dem Einsatz 17 können im Bereich der freien Enden der Schenkel 13a,13b auch Hohlräume mit einem Einschiebe-Schlitz vorgesehen sein. Nachdem die elektronischen Bauteile 27,29,31 in die Hohlräume eingeschoben sind, können die Einschiebe-Schlitze verschlossen werden, beispielsweise indem sie vergossen werden. Der Schutz der elektronischen Bauteile 27,29,31 ist dadurch verstärkt, dass die Metallklammer 19 den Einsatz 17 aussen umschliesst und als Schutzschild dienen kann.

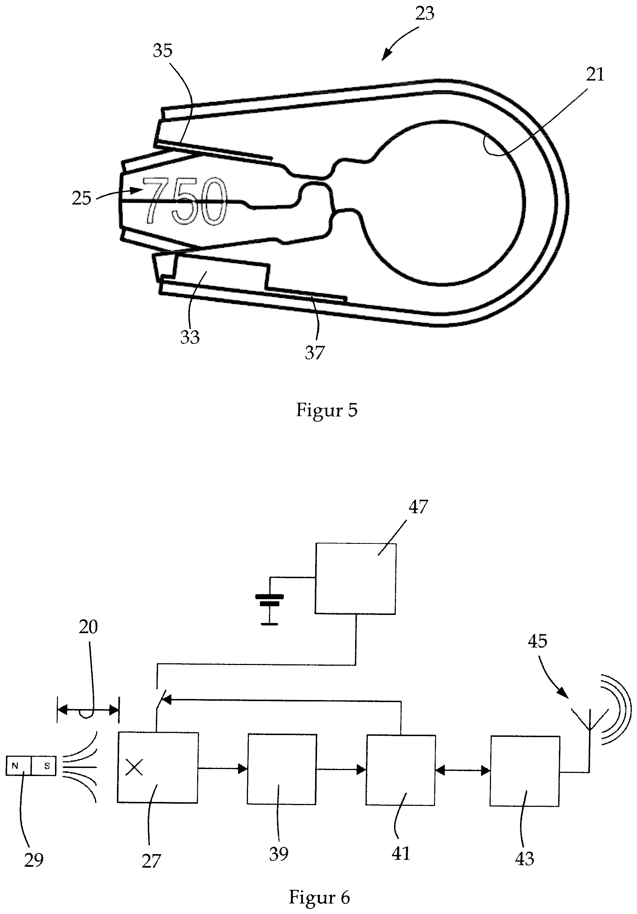

In der Ausführungsform gemäss der Figur 5 ist der magnetische Abstandssensor 25 durch einen Wirbelstrom-Sensor 33 und eine stromleitende Metallplatte 35 realisiert. Das Messprinzip des Wirbelstrom-Sensors 33 beruht darauf, dass eine Spule von einem hochfrequenten Wechselstrom durchflossen wird. Wird leitfähiges Material, beispielsweise die Metallplatte 35, in das Magnetfeld der Spule eingebracht, dann entstehen Wirbelströme, die als erhöhte Leistungsaufnahme der Spule messbar sind. Je näher sich die Metallplatte 35 an dem Wirbelstrom-Sensor 33 befindet, umso höher ist die Leistungsaufnahme der Spule. Bevorzugt ist die Spule mit einem Topfkern in einem freien Ende der Schenkel 13a bzw.13 b untergebracht. Der Topfkern ist einseitig geschlossen, wodurch verhindert ist, dass das Magnetfeld ungehindert von der der Metallplatte abgewandten Seite austreten kann. Auch in dieser Ausführungsform ist der Wirbelstrom-Sensor mit einer Leiterplatte 37 verbunden.

Auf der Leiterplatte 31 bzw. 37 ist eine Energiequelle, bevorzugt eine Knopfzelle 47, und ein Sender 45 angeordnet, welche mit einem ebenfalls auf der Leiterplatte 31,37 angeordneten Mikroprozessor verbunden sind. Zwischen dem Sender 45 und dem Mikroprozessor 41 ist bevorzugt ein Sendemodul 43 zwischengeschaltet (Figur 6). Wenngleich es denkbar ist, dass der Sender mit jedem Funkstandard sendet und auch Daten empfangen kann, so ist ein stromsparender Funkstandard bevorzugt, welcher nur Daten sendet und dies nicht ständig, sondern nur in bestimmten Zeitintervallen (1-Weg-Kommunikation). Als Funkstandard bietet sich daher Bluetooth 4.0 an, welcher eine Niedrigenergie-Betriebsweise ermöglicht.

Zur Konfiguration und Kalibrierung des elektronischen Gurtspannungs-Indikators 23 ist es vorgesehen, dass das Sendemodul 43 bzw. der Sender 45 in eine 2-Wege-Kommunikation umschaltbar ist. Dazu wird der Hall-Sensor 27 durch ein externes elektrisches Wechselfeld angeregt und schaltet das Sendemodul 43 bzw. den Sender 45 in die 2-Wege-Kommunikation um, in welcher der Sender 45 auch Daten empfangen kann. Der Datenempfang, beispielsweise zur Konfiguration und Kalibrierung, erfolgt über Funk. Dadurch kann auf eine Schnittstelle verzichtet werden und die elektronischen Bauteile können vollverkapselt und dementsprechend gut geschützt in den Schenkeln 13a,13b integriert sein.

In Abhängigkeit vom Abstand 20 der beiden Schenkel 13a,13b zueinander kann sich der elektronische Gurtspannungs-Indikator 23 in unterschiedlichen Modi befinden. Ist der Indikator 23 nicht im Einsatz und es liegt keine Gurtspannung an, wechselt der Indikator 23 in den "Tiefschlafmodus". Der Indikator 23 ist dann abgeschaltet und der Sender sendet gar nicht. Wird eine Gurtspannung an den Indikator 23 angelegt, so wechselt der Indikator 23 in den "Aktivmodus" in dem der Sender in bestimmten Zeitintervallen Daten sendet, welche den Abstand 20 der beiden Schenkel 13a,13b und eine dementsprechende Gurtspannung wieder geben. Der Indikator 23 kann auch in einen "Schlafmodus" versetzt werden, in dem die Sendeintervalle verlängert sind, wodurch Energie eingespart werden kann. Der Indikator 23 wird in diesen Modus versetzt, wenn über längere Zeit eine konstante Gurtspannung erfasst wird. Beispielsweise sendet der Sender dann nur alle 30-60 Sekunden ein Datensignal. Der Wechsel zwischen den einzelnen Betriebs-Modi kann auch durch oben beschriebenes Anlegen eines externen Wechselfeldes erfolgen. Dabei fungiert der Hall-Sensor 27, angeregt durch das externe Wechselfeld, als Empfangs-Kommunikationsschnittstelle, um zwischen den unterschiedlichen Betriebs-Modi schalten zu können.

Die Identifikationsnummer des Indikators kann dadurch vergeben werden, indem dieser mit dem RF-Tag oder dem Barcode des Spanngurtes kommuniziert. Bevorzugt ist an jeder Gurtschlaufe des Spanngurtes ein Indikator 23 angeordnet. Falls sich der Spanngurt an einem Ladegut verklemmt und nur eine Seite gespannt wird, so wird dieser Fehler von einem der Mehrzahl von Indikatoren 23 erkannt, da nicht alle Indikatoren eine ausreichende Gurtspannung anzeigen.

Das Blockschaltbild des Indikators 23 mit Hall-Sensor 27 ist in Figur 6 gezeigt. Das vom Hall-Sensor 27 generierte analoge Messsignal ist vom Abstand 20 des Permanentmagneten 29 abhängig. Zur Umwandlung in digitale Daten steht ein Analog/Digital-Wandler 39 bereit, welcher die digitalen Daten an einen Mikroprozessor 41 weiterleitet. Der Mikroprozessor 41 leitet die Daten an ein Sendemodul 43 weiter. Das Sendemodul 43 kann wie oben beschrieben ein Bluetooth 4.0 Sendemodul sein. Die Daten können dann von einem Sender 45 an einen Empfänger gesendet werden.

Über den Mikroprozessor 41 lässt sich auch die Stromversorgung des Hall-Sensors 27 ein- und ausschalten. Dadurch kann über den Mikroprozessor gesteuert werden, ob der Hall-Sensor aktiv ist oder nicht.

Die an eine Empfangseinheit drahtlos per Funk übermittelten Datensignale können durch die Empfangseinheit visualisiert werden. Die Empfangseinheit umfasst zweckmässigerweise einen Empfänger, eine Anzeige, einen Anschluss an eine vorhandene Stromversorgung und einen Mikroprozessor. Beispielsweise können in der Führerkabine eines Lastwagens die Spannungszustände einer Vielzahl von das Ladegut sichernder Spanngurten auf einem Anzeigegerät (Display) angezeigt werden. Die Spannungszustände können beispielsweise durch ein dynamisches Balkendiagramm visualisiert sein oder bei einem Spannungsverlust kann ein Alarm in Gestalt eines visuellen oder akustischen Signals ausgelöst werden. Zu zweckmässigen weiteren Funktionsblöcken der Empfangseinheit zählen Schnittstellen zur Verbindung mit einem Repeater, welcher die Funksignale des Indikators an die Empfangseinheit weiterleitet, und zur Verbindung mit dem Tachometer-Signal des LKWs.

Zusätzlich zu den Spannungszuständen der Spanngurten kann die Empfangseinheit auch weitere Parameter des Gurtspannungs-Indikators 23 abfragen und visualisieren. Dazu zählen die Batteriespannung des Indikators 23, Minima und Maxima der Gurtspannungen in einem Zeitintervall oder das Produktionsdatum des Indikators 23. Ferner kann ein GPS Empfänger und eine USB Schnittstelle vorhanden sein. Durch Aufzeichnung der GPS Position ist eine lückenlose Rückverfolgbarkeit der Aufzeichnungen sicher gestellt.

Bevorzugt verfügt die Empfangseinheit über zwei Bluetooth LE (Low Energy) Module. Dadurch kann die Empfangseinheit mit einem Smartphone verbunden werden. Ist das Smartphone mit der Empfangseinheit verbunden, so lässt sich die gesamte Vorichtung damit Bedienen und Daten lassen sich auf dem Smartphone visualisieren. Die eigentliche Bedienung des Systems findet daher über ein Smartphone statt. Das erste Bluetooth LE Modul ist als Master ausgelegt und kommuniziert mit den Indikatoren und Repeatern. Das zweite Bluetooth LE Modul ist als Slave ausgelegt und kommuniziert mit dem Smartphone.

Die Empfangseinheit kann auch zur Dokumentation bzw. der Protokollierung der Zugspannung einer Vielzahl von Spanngurten herangezogen werden. Dazu werden die übermittelten Datensignale in einem Datenspeicher permanent im Speicher der Empfangseinheit aufgezeichnet. Die Spannungszustände der erfassten Spanngurte sind daher in Echtzeit erfassbar. Beispielsweise können die Daten der Spannungszustände auf einem externen USB-Stick als pdf-Dateien übertragen werden. Denkbar ist es auch, dass die Daten direkt auf einem USB-Stick in einem unveränderbaren Datenformat abgespeichert werden. Die dokumentierten Zugspannungen der eingesetzten Spanngurte können demnach auf jedem PC und jederzeit ausgelesen werden.

### Legende

- 11: Mechanischer Gurtspannungs-Indikator
- 13a,13b: Erster und zweiter deformierbarer Schenkel
- 15: Basis
- 17: Einsatz aus Kunststoff
- 19: Metallklammer
- 20: Abstand zwischen den Schenkeln
- 21: Bolzenauge
- 23: Elektronischer Gurtspannungs-Indikator
- 25: Magnetischer Abstandssensor
- 27: Hall-Sensor
- 29: Permanentmagnet
- 31: Leiterplatte
- 33: Wirbelstrom-Sensor
- 35: Metallplatte
- 37: Leiterplatte
- 39: Analog/ Digital-Wandler
- 41: Mikroprozessor
- 43: Sendemodul
- 45: Sender
- 47: Knopfzelle

## Patentansprüche

1. Vorrichtung zur Messung der Zugspannung in einem Spanngurt mit
- einer Haltevorrichtung zum Halten eines Federelements,
- einem elastisch verformbaren Federelement (11,23), das durch die Haltevorrichtung gehalten ist und an welchem ein Abschnitt des Spanngurt Kraft angreifen und das Federelement (11,23) elastisch deformieren kann, und
- einer elektronischen Sensoreinheit mit
- einer Sensoranordnung (25), die die Auslenkung des Federelements (23) misst und ein Datensignal generiert,
- einem Sender (45) zur Übertragung des Datensignals an eine Empfangseinheit,
- einem Mikroprozessor (41), der mit der Sensoranordnung (25) und dem Sender (45) in Verbindung steht und
- einer Energiequelle (47) zur Versorgung der elektronischen Sensoreinheit mit Strom und
- einer elektronischen Empfangseinheit für den Empfang des Datensignals vom Sender mit
- einem Empfänger
- einer Anzeige, für die Anzeige des Datensignals und
- einem Mikroprozessor, der mit dem Empfänger und der Anzeige in Verbindung steht,
**dadurch gekennzeichnet,**
**dass** bei der Vergrösserung der Spannkraft die gegenüberliegenden Enden (13a,13b) des Federelements (11,23) einander angenähert werden und die Sensoranordnung (25) an den gegenüberliegenden Enden des Federelements (23) angeordnet ist, wodurch der Abstand (20) der gegenüberliegenden Enden des Federelements (11,23) von der Sensoranordnung (25) gemessen wird.

2. Vorrichtung nach Anspruch 1, **dadurch gekennzeichnet, dass** das Federelement ein U-förmiges Formteil (23) mit zwei elastisch deformierbaren Schenkeln (13a,13b) ist.

3. Vorrichtung nach Anspruch 2, **dadurch gekennzeichnet, dass** die Sensoranordnung (25) in den Schenkeln (13a,13b) des Federelements (23) integriert ist.

4. Vorrichtung nach Anspruch 3, **dadurch gekennzeichnet, dass** die Sensoranordnung (25) im Bereich der freien Enden der Schenkel (13a,13b) integriert ist.

5. Vorrichtung nach einem der Ansprüche 1 bis 4, **dadurch gekennzeichnet, dass** die Sensoranordnung durch ein magnetisches Messsystem (25) gebildet ist.

6. Vorrichtung nach einem der Ansprüche 1 bis 4, **dadurch gekennzeichnet, dass** die Sensoranordnung (25) entweder durch einen Magnetsensor, insbesondere einen Hallsensor (27)und einen Permanentmagneten (29) oder durch einen Wirbelstromsensor (33) und eine Metallplatte (35) gebildet ist.

7. Vorrichtung nach einem der Ansprüche 1 bis 6, **dadurch gekennzeichnet, dass** die elektronische Sensoreinheit in dem Federelement (23) integriert ist.

8. Vorrichtung nach einem der Ansprüche 1 bis 7, **dadurch gekennzeichnet, dass** der Sender (45) und ein mit dem Sender (45) verbundenes Sendemodul (43) für die 1-Weg Kommunikation ausgelegt sind.

9. Vorrichtung nach einem der Ansprüche 6 bis 8, **dadurch gekennzeichnet, dass** der Hall-Sensor (27) durch Anlegen eines externen Wechselfeldes eine Empfangs-Kommunikationsschnittstelle zum Schalten zwischen unterschiedlichen Betriebsmodi ist.

10. Vorrichtung nach Anspruch 9, **dadurch gekennzeichnet, dass** durch Anlegen eines externen Wechselfeldes der Hall-Sensor (27) den Sender (45) und/oder das Sendemodul (43) von einer 1-Weg Kommunikation in einen Sende- und Empfänger Modus (2-Weg Kommunikation) umschalten kann.

11. Verfahren zur Messung der Zugspannung in einem Spanngurt mit folgenden Verfahrensschritten:
- Anordnen eines Federmittels (11,23) am Spanngurt derart, dass beim Anlegen einer Zugspannung das Federmittel (11,23) elastisch deformiert wird,
- Anordnen einer Sensoranordnung (25) am oder benachbart zum Federmittel (23), um die Auslenkung des Federmittels zu bestimmen und ein Datensignal zu erzeugen,
- Übermitteln des Datensignals an eine Empfängereinheit zur Anzeige der Datensignale mittels eines Senders,
**dadurch gekennzeichnet,**
**dass** die Spannkraft gemessen wird, indem die Sensoranordnung (25) an den Enden (13a,13b) des Federelements angeordnet wird und der Abstand (20) der beiden Enden von der Sensoranordnung (25) gemessen wird.

12. Verfahren nach Anspruch 11, **dadurch gekennzeichnet, dass** die Spannkraft mittels eines Hallsensors (27) und eines Permanentmagneten (29) oder mittels eines Wirbelstromsensors (33) gemessen wird.

13. Verfahren nach Anspruch 11 oder 12, **dadurch gekennzeichnet, dass** im Speicher eines an dem Federelement angeordneten Mikroprozessors (41) ein für das entsprechende Federmittel (23) zutreffender Skalierungsfaktor gespeichert wird.

14. Verfahren nach Anspruch 13, **dadurch gekennzeichnet, dass** der Skalierungsfaktor durch eine vorhergehende Eichung bestimmt wird.

15. Verfahren nach einem der Ansprüche 12 bis 14, **dadurch gekennzeichnet, dass** durch Anlegen eines externen elektrischen Wechselfeldes an den Hall-Sensor (27) der Sender (45) und/oder das Sendemodul (43) in einen Empfangsmodus umgeschaltet wird.

## Claims

1. Device for measuring the tensile force in a tensioning belt with
- a holding device for holding a spring element,
- an elastically deformable spring element (11, 23) that is held by the holding device and on which a section of the tensioning belt can absorb forces and elastically deform the spring element (11, 23) and
- an electronic sensor unit with
- a sensor arrangement (25) that measures the excursion of the spring element (23) and generates a data signal,
- an emitter (45) for transmitting the data signal to a receiving unit,
- a microprocessor (41) that is connected with the sensor arrangement (25) and the emitter (45) and
- an energy source (47) for supplying the electronic sensor unit with current and
- an electronic receiving unit for receiving the data signal from the emitter with
- a receiver
- a display for displaying the data signal and
- a microprocessor that is connected with the receiver and the display,
**characterized in**
**that** during the increase of the tensioning force, the opposed ends (13a, 13b) of the spring element (11, 23) come closer to each other and the sensor arrangement (25) is placed at the opposed ends of the spring element (23) so that the distance (20) of the opposed ends of the spring element (11, 23) is measured by the sensor arrangement (25).

2. Device according to claim 1, **characterized in that** the spring element is a U-shaped molded part (23) with two elastically deformable legs (13a, 13b).

3. Device according to claim 2, **characterized in that** the sensor arrangement (25) is integrated in the legs (13a, 13b) of the spring element (23).

4. Device according to claim 3, **characterized in that** the sensor arrangement (25) is integrated in the area of the free ends of the legs (13a, 13b).

5. Device according to one of the claims 1 to 4, **characterized in that** the sensor arrangement is formed by a magnetic measuring system (25).

6. Device according to one of the claims 1 to 4, **characterized in that** the sensor arrangement (25) is formed either by a magnet sensor, in particular a Hall sensor (27) and a permanent magnet (29), or by an eddy current sensor (33) and a metal plate (35).

7. Device according to one of the claims 1 to 6, **characterized in that** the electronic sensor unit is integrated in the spring element (23).

8. Device according to one of the claims 1 to 7, **characterized in that** the emitter (45) and an emitting module (43) connected with the emitter (45) are designed for the one-way communication.

9. Device according to one of the claims 6 to 8, **characterized in that** the Hall sensor (27) is, by applying an external alternating field, a receiving communication interface for switching between different operating modes.

10. Device according to claim 9, **characterized in that**, by applying an external alternating field, the Hall sensor (27) can switch the emitter (45) and/or the emitting module (43) from a one-way communication into an emitting and receiving mode (two-way communication).

11. Method for measuring the tensile force in a tensioning belt with the following method steps:
- Arrangement of a spring means (11, 23) on the tensioning belt so that, when applying a tensile force, the spring means (11, 23) is deformed elastically,
- Arrangement of a sensor arrangement (25) on or adjacent to the spring means (23) in order to determine the excursion of the spring means and to generate a data signal,
- Transmission of the data signal to a receiving unit for displaying the data signals by means of an emitter,
**characterized in that** the tensile force is measured, the sensor arrangement ("5) being placed at the ends (13a, 13b) of the spring element and the distance (20) of the two ends of the sensor arrangement (25) being measured.

12. Method according to claim 11, **characterized in that** the tensile force is measured by means of a Hall sensor (27) and a permanent magnet (29) or by means of an eddy current sensor (33).

13. Method according to claim 11 or 12, **characterized in that** a scaling factor applicable to the corresponding spring means (23) is stored in the memory of a microprocessor (41) placed on the spring means.

14. Method according to claim 13, **characterized in that** the scaling factor is determined by a preliminary calibration.

15. Method according to one of the claims 12 to 14, **characterized in that**, by applying an external electric alternating field to the Hall sensor (27), the emitter (45) and/or the emitting module (43) is switched to a receiving mode.

## Revendications

1. Dispositif pour mesurer la tension de traction dans une sangle de serrage avec
- un dispositif de support pour supporter un élément à ressort,
- un élément à ressort (11, 23) déformable élastiquement qui est maintenu par le dispositif de support et sur lequel une section de la sangle de serrage peut attaquer une force et déformer élastiquement l'élément à ressort (11, 23) et
- une unité de capteur électronique avec
- un dispositif de capteur (25) qui mesure l'excursion de l'élément à ressort (23) et génère un signal de données,
- un émetteur (45) pour la transmission du signal de données à une unité de réception,
- un microprocesseur (41) qui est en relation avec le dispositif de capteur (25) et l'émetteur (45) et
- une source d'énergie (47) pour l'alimentation en courant de l'unité de capteur électronique et
- une unité de réception électronique pour la réception du signal de données de l'émetteur avec
- un récepteur
- un affichage pour l'affichage du signal de données et
- un microprocesseur qui est en relation avec le récepteur et l'affichage
**caractérisé en ce**
**que**, lors de l'augmentation de la force de serrage, les extrémités opposées (13a, 13b) de l'élément à ressort (11, 23) se rapprochent l'une de l'autre et le dispositif de capteur (25) est placé aux extrémités opposées de l'élément à ressort (23) si bien que l'écart (20) des extrémités opposées de l'élément à ressort (11, 23) est mesuré par le dispositif de capteur (25).

2. Dispositif selon la revendication 1, **caractérisé en ce que** l'élément à ressort est une pièce moulée en forme de U (23) avec deux montants déformables élastiquement (13a, 13b).

3. Dispositif selon la revendication 2, **caractérisé en ce que** le dispositif de capteur (25) est intégré aux montants (13a, 13b) de l'élément à ressort (23).

4. Dispositif selon la revendication 3, **caractérisé en ce que** le dispositif de capteur (25) est intégré à la zone des extrémités libres des montants (13a, 13b).

5. Dispositif selon l'une des revendications 1 à 4, **caractérisé en ce que** le dispositif de capteur est formé par un système de mesure magnétique (25).

6. Dispositif selon l'une des revendications 1 à 4, **caractérisé en ce que** le dispositif de capteur (25) est formé soit par un capteur magnétique, en particulier un capteur de Hall (27) et un aimant permanent (29) ou par un capteur de courant de Foucault (33) et une plaque de métal (35).

7. Dispositif selon l'une des revendications 1 à 6, **caractérisé en ce que** l'unité de capteur électronique est intégrée à l'élément à ressort (23).

8. Dispositif selon l'une des revendications 1 à 7, **caractérisé en ce que** l'émetteur (45) et un module d'émission (43) relié à l'émetteur (45) sont conçus pour la communication à sens unique.

9. Dispositif selon l'une des revendications 6 à 8, **caractérisé en ce que** le capteur de Hall (27) est, en appliquant un champ alternatif externe, une interface de communication et de réception pour commuter entre différents modes de fonctionnement.

10. Dispositif selon la revendication 9, **caractérisé en ce qu'**en appliquant un champ alternatif externe le capteur de Hall (27) peut commuter l'émetteur (45) et/ou le module d'émission (43) d'une communication à sens unique en un mode d'émission et de réception (communication bidirectionnelle).

11. Procédé pour mesurer la tension de traction dans une sangle de serrage avec les étapes de procédé suivantes :
- disposition d'un moyen à ressort (11, 23) sur la sangle de serrage de telle manière qu'en appliquant une tension de traction le moyen à ressort (11, 23) est déformé élastiquement,
- disposition d'un dispositif ce capteur (25) sur ou au voisinage du moyen à ressort (23) pour déterminer l'excursion du moyen à ressort et pour générer un signal de données,
- transmission du signal de données à une unité de réception pour l'affichage des signaux de données au moyen d'un émetteur,
**caractérisé en ce**
**que** la force de serrage est mesurée en plaçant le dispositif de capteur (25) aux extrémités (13a, 13b) du moyen à ressort et en mesurant l'écart (20) entre les deux extrémités par le dispositif de capteur (25).

12. Procédé selon la revendication 11, **caractérisé en ce que** la force de serrage est mesurée au moyen d'un capteur de Hall (27) et d'un aimant permanent (29) ou au moyen d'un capteur de courant de Foucault (33).

13. Procédé selon la revendication 13, **caractérisé en ce que** le facteur d'échelle est déterminé par un étalonnage préalable.

15. Procédé selon l'une des revendications 12 à 14, **caractérisé en ce qu'**en appliquant un champ alternatif externe au capteur de Hall (27), l'émetteur (45) et/ou le module d'émission (43) sont commutés dans un mode de réception.
